# NEUE EUROPÄISCHE PATENTSCHRIFT

(11) **EP 2 697 530 B2**
(45) Veröffentlichungstag und Bekanntmachung des Hinweises auf die Entscheidung über den Einspruch: **09.05.2018**
(45) Hinweis auf die Patenterteilung: 11.03.2015
(21) Anmeldenummer: 12718578.3
(22) Anmeldetag: 26.03.2012
(51) Int. Cl.: F16D 13/71, F16F 15/14

(54) **KUPPLUNGSANORDNUNG**
CLUTCH ARRANGEMENT
ENSEMBLE EMBRAYAGE

(30) Priorität: 11.04.2011 DE 102011016711
(43) Veröffentlichungstag der Anmeldung: 19.02.2014
(73) Patentinhaber: Schaeffler Technologies AG & Co. KG, 91074 Herzogenaurach (DE)
(72) Erfinder: NACHTMANN, Florian, 67100 Straßburg (FR); RABER, Christoph, 66564 Ottweiler-Steinbach (DE); SCHILLINGER, Olaf, 76275 Ettlingen (DE); SCHERRER, Marcus, 76199 Karlsruhe (DE)
(86) Internationale Anmeldenummer: PCT/DE2012/000313
(87) Internationale Veröffentlichungsnummer: WO 2012/139543

(56) Entgegenhaltungen:
- EP-A1- 0 528 276
- EP-A1- 0 917 839
- EP-B1- 0 803 659
- DE-A1- 10 005 543
- DE-A1- 19 831 158
- DE-A1-102006 028 552
- DE-A1-102006 028 556
- DE-A1-102008 059 297
- DE-A1-102009 042 812
- DE-A1-102009 042 831
- DE-A1-102010 022 252
- FR-A1- 2 426 834
- US-B1- 6 325 192
- SASS F. ET AL: 'Dubbel "Taschenbuch für den Maschinenbau"', Bd. 1. BAND, 1974, SPRINGER VERLAG, BERLIN Seiten 696 - 697

## Beschreibung

Die Erfindung betrifft eine Kupplungsanordnung, insbesondere zur Verwendung im Antriebsstrang eines Kraftfahrzeuges, umfassend eine antriebsseitig angeordnete Schwungscheibe, die vermittels einer Federanordnung mit einer Sekundärscheibe gekoppelt ist und mit dieser Teil eines Zweimassenschwungrades ist, wobei die Sekundärscheibe mindestens ein Fliehkraftpendel trägt.

Ein Fliehkraftpendel (FKP) dient wie ein Zweimassenschwungrad (ZMS) der Reduzierung von Schwingungen und Geräuschen im Antriebsstrang eines Kraftfahrzeugs. Das Fliehkraftpendel umfasst wenigstens eine Pendelmasse, die beispielsweise mittels Trägerrollen an einer rotierenden Trägerscheibe aufgehängt ist und entlang vorgegebener Pendelbahnen eine Relativbewegung zu der Trägerscheibe ausführen kann, wobei diese einen variablen Abstand zur Rotationsachse der Trägerscheibe einnimmt. Der Aufbau und die Funktion einer solchen Fliehkraftpendeleinrichtung ist beispielsweise auch in der DE 10 2006 028 552 A1 beschrieben. Fliehkraftpendeleinrichtungen sind zudem aus der DE 10 2007 024 115 A1 und der DE 10 2008 005 138 A1 bekannt. Die Anwendung eines Fliehkraftpendels in Kombination mit einem Zweimassenschwungrad kann auf unterschiedliche Weise erfolgen. Bekannt sind die Anordnung des Fliehkraftpendels am Sekundärflansch des Zweimassenschwungrades oder zwischen Gegendruckplatte und Primärflansch an einem eigenen mit dem Sekundärflansch verbundenen Flansch.

Eine Fahrzeugkupplung mit einem Fliehkraftpendel, das in die Gegendruckplatte integriert ist, ist aus der DE 10 2009 042 831 A1 bekannt. Das Fliehkraftpendel ist radial außerhalb der Kupplungsscheibe und der Druck- bzw. Gegendruckplatte angeordnet. Durch den großen Radius ihrer Bewegungsbahn ist die Momentenwirkung der pendelnden Massen groß, doch können nur drei Pendel über den Umfang angeordnet werden, da der Bauraum auch für Tellerfedern zur Aufhängung der Druckplatte an dem Kupplungsgehäuse genutzt werden muss.

Bekannte Umsetzungen von in die Gegendruckplatte integrierten Fliehkraftpendeln lassen sich nur aufwändig im Antriebsstrang eines Fahrzeuges montieren, da eine Montage direkt aus der Transportstellung der vormontierten Kupplung nicht möglich ist. Die Kupplung muss zur Montage teilweise demontiert werden, wobei eine Vielzahl von manuellen Arbeitsgängen notwendig ist.

Eine Aufgabe der Erfindung ist es, die Montage der Kupplungsanordnung zu vereinfachen, insbesondere die Anzahl der Demontageschritte vor Montage der in der Transportstellung angelieferten Kupplungsanordnung zu verringern.

Diese Aufgabe wird gelöst durch eine Kupplungsanordnung gemäß Patentanspruch 1. Das Kupplungsgehäuse, auch Kupplungsdeckel genannt, ist nur mit den in die Gewindehülsen eingeschraubten Schrauben an der Sekundärseite des Zweimassenschwungrades, sprich der auch als Gegendruckplatte dienenden Sekundärscheibe, befestigt. Das Zweimassenschwungrad samt Fliehkraftpendel bildet so eine Baueinheit, die nur mit besagten Schrauben mit der die Druckplatte, Tellerfeder und so weiter umfassenden zweiten Baugruppe verbunden wird. Es Bedarf daher keines speziellen Werkzeuges zum Einbau der Kupplungsbaugruppe.

Die Montage des Fliehkraftpendels erfolgt unabhängig von der Montage der mit dem Kupplungsgehäuse verbundenen Bauteile.

Bevorzugte Ausführungsformen sind in den abhängigen Patentansprüchen dargelegt.

In einer Ausführungsform der Erfindung umfasst das mindestens eine Fliehkraftpendel ein sekundärseitiges Führungsblech und ein gehäuseseitiges Führungsblech, zwischen denen eine Pendelmasse angeordnet ist, wobei die Führungsbleche beiderseits eines Bereiches der Gewindehülse mit einem vergrößerten Durchmesser angeordnet sind. Der Bereich mit dem vergrößerten Durchmesser ist im Querschnitt eine Art Wulst, der an beiden axialen Enden eine Anlagefläche jeweils für eines der beiden Führungsbleche aufweist. Auf den Führungsblechen bewegt sich das Pendel gleitend relativ zur Gegendruckplatte bzw. Kupplungsgehäuse.

In einer Ausführungsform der Erfindung weist die Gewindehülse einen holzylindrischen Flansch auf, der in eine Bohrung des Kupplungsgehäuses ragt. Der Flansch dient der Zentrierung des Kupplungsgehäuses zur Gewindehülse. Die Gewindehülse umfasst also alle Mittel zur radialen und axialen Festlegung (Zentrierung) und zur Befestigung, es bedarf keiner weiteren Bolzen oder dergleichen.

In einer Ausführungsform der Erfindung ist mindestens ein Scherspannstift in Bohrungen der Sekundärscheibe sowie des Kupplungsgehäuses gelagert und ragt durch Bohrungen des sekundärseitigen Führungsblechs und des gehäuseseitigen Führungsblechs. Der Scherspannstift legt die Position des Führungsblechs in radialer und in Umfangsrichtung fest.

In einer Ausführungsform der Erfindung begrenzt mindestens ein Anschlagmittel die Pendelbewegung der Pendelmasse. Vorzugsweise ist jeweils ein Anschlagmittel beiderseits jeder Pendelmasse angeordnet und begrenzt deren Pendelausschlag.

Das mindestens eine Anschlagmittel ist in einer Ausführungsform der Erfindung in Bohrungen des sekundärseitigen Führungsblechs und des gehäuseseitigen Führungsblechs gelagert. Dabei ist das Anschlagmittel mit beiden Führungsblechen vernietet oder nur mit einem der Führungsbleche, insbesondere mit dem gehäuseseitigen Führungsblech, vernietet. Bei letztgenannter Ausführungsform ist die Montage besonders leicht, da zunächst das sekundärseitige Führungsblech montiert werden kann, sodann das Anschlagmittel eingesteckt wird, die Pendelmassen montiert und dann das deckelseitige Führungsblech auf die Anschlagmittel aufgesteckt und vernietet wird. Sobald der Kupplungsdeckel angeschraubt ist sind auch die Fliehkraftpendel in axialer Richtung festgelegt.

In einer Ausführungsform der Erfindung ist das mindestens eine Anschlagmittel ein Flachniet mit einer Anschlag dämpfenden Ummantelung. Das Flachniet ist ein länglicher Stab mit rechteckigem Querschnitt, dessen beide Enden runden Querschnitt haben und mit diesen Enden in die Führungsbleche ragen. Die Sekundärscheibe und das Kupplungsgehäuse weisen Bohrungen, Vertiefungen oder dergleichen zur Aufnahme von aus den Führungsblechen herausragenden Teilen der Enden, die auch Nietköpfe sein können, auf. Die Ummantelung ist ein Gummiüberzug, eine Kunststoffummantelung, ein aufgeschobenes Rohr oder dergleichen.

In einer Ausführungsform der Erfindung weist ein Primärdeckel der antriebseitigen Schwungscheibe einen hohlzylindrischen Bereich auf, der zumindest Teile der Fliehkraftpendel in axialer Richtung überdeckt und so einen Berstschutz bildet. Bei Versagen von Teilen der Fliehkraftpendel bzw. der Kupplung werden Trümmer durch den Berstschutz aufgefangen und verhindern eine Beschädigung umliegender Bauteile.

Im Folgenden wird ein Ausführungsbeispiel der Erfindung anhand der beiliegenden Zeichnungen erläutert. Dabei zeigen:
- Figur 1: einen vereinfacht schematisch dargestellten Antriebsstrang,
- Figur 2: Teile eines Ausführungsbeispiels einer erfindungsgemäßen Kupplungsanordnung im Schnitt,
- Figur 3: Teile der Reibungskupplung gemäß Figur 2 in einer vergrößerten Darstellung,
- Figur 4: das Zweimassenschwungrad einschließlich Sekundärscheibe und der daran angebrachten Fliehkraftpendel als Baugruppe in räumlicher Darstellung,
- Figur 5: die vollständig montierte Kupplung in räumlicher Darstellung,
- Fig. 6 bis Fig. 10: Fertigungsstufen der Vormontage der Fliehkraftpendel an der Sekundärscheibe.

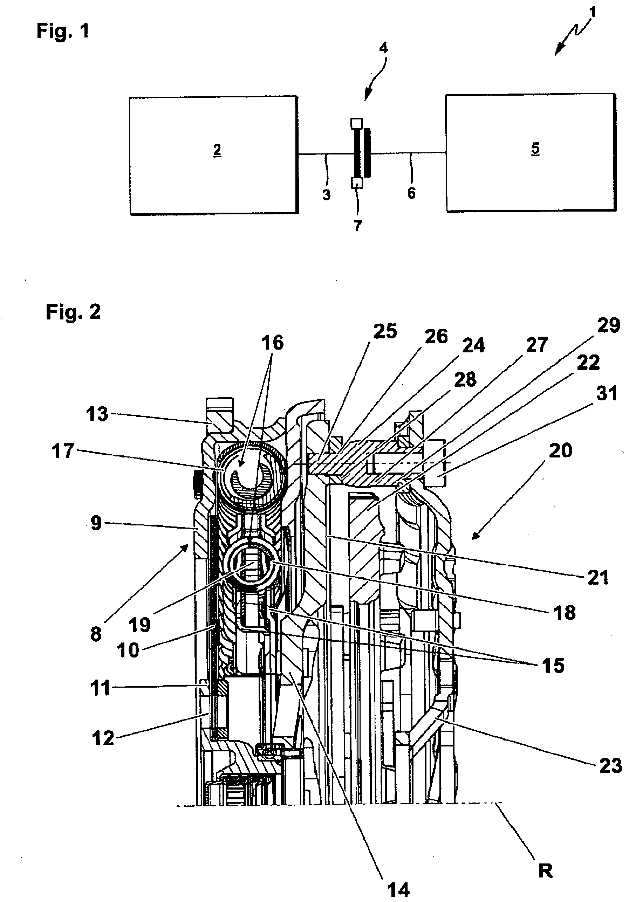

Figur 1 zeigt einen vereinfacht schematisch dargestellten Antriebsstrang 1 mit einer Brennkraftmaschine 2 mit einer Kurbelwelle 3, an der eine Kupplungsanordnung 4 drehfest aufgenommen ist. Zwischen Kurbelwelle 3 und Kupplungsanordnung 4 kann ein Zweimassenschwungrad angeordnet sein. Die Kupplungsanordnung 4 kann je nach Ausführung des Getriebes 5 als einfache Reibungskupplung oder als Doppelkupplung mit zwei Reibungskupplungen ausgeführt sein. Dementsprechend erfolgt die Übertragung des von der Brennkraftmaschine 2 abgegebenen Moments über die Kupplungsanordnung 4 auf zwei oder - wie gezeigt - auf eine Getriebeeingangswelle 6. Im Getriebe 5 erfolgt eine Drehzahlwandlung und eine - nicht dargestellte - Ausgabe des Drehmoments über ein Differential auf die Antriebsräder. Die Kupplungsanordnung 4 weist zur Verminderung oder Eliminierung von Drehschwingungen des Antriebsstrangs 1 ein Fliehkraftpendel 7 auf, das für sich oder in Abstimmung mit weiteren, zur Verminderung von Drehschwingungen im Antriebsstrang angeordneten Einrichtungen, beispielsweise einem Zweimassenschwungrad und/oder einem Kupplungsscheibendämpfer, auf das Schwingungsverhalten der Brennkraftmaschine 2 abgestimmt ist.

Figur 2 zeigt Teile einer erfindungsgemäßen Kupplungsanordnung 4 im Schnitt. Eine Schwungscheibe 8 umfassend eine Primärmasse 9, die mit einem Verbindungsblech 10 mit einem Kurbelwellenflansch 11 fest verbunden ist, ist mit Befestigungsbohrung 12 mit einer in Figur 2 nicht dargestellten Kurbelwelle eines Verbrennungsmotors fest verbunden. Die Primärmasse 9 trägt ein Anlasserzahnkranz 13, der in Eingriff mit einem Ritzel eines elektrischen Starters ist bzw. in Eingriff mit diesem zu bringen ist. Eine Sekundärscheibe 14, die gleichzeitig Gegendruckplatte der später dargestellten Reibungskupplung ist, ist mit einem Sekundärflansch 15 mit einer zwischen der Primärmasse 9 und der Sekundärscheibe 14 angeordneten Federanordnung 16 verbunden. Die Federanordnung 16 umfasst Hauptdämpferfeder 17 und Nebendämpferfedern 18, die über einen Verbindungsflansch 19 miteinander in Serie geschaltet sind. Ein derartiger Aufbau eines Zweimassenschwungrades ist an sich aus dem Stand der Technik bekannt.

Die Sekundärscheibe 14 ist Teil der Sekundärmasse und ist zugleich die Gegendruckplatte einer Reibungskupplung 20. Die Sekundärscheibe 14 weist dazu eine mit einem in Figur 2 nicht dargestellten Reibbelag versehene Reibfläche 21 auf, welche mit einer in Figur 2 nicht dargestellten Kupplungsscheibe, die mit einer Getriebeeingangswelle eines Schaltgetriebes gekoppelt ist, zusammen wirkt. Mittels einer in axialer Richtung verlagerbaren Andruckplatte 22 kann die Kupplungsscheibe zwischen der Reibfläche 21 der Sekundärscheibe 14 und der Andruckplatte 22 reibschlüssig eingeklemmt werden. Dazu ist die Andruckplatte 22 bezüglich der Drehung um die Rotationsachse R drehfest mit der Sekundärscheibe 14 verbunden. Die axiale Richtung ist die Bewegung entlang der Rotationsachse R. Die Betätigung der Andruckplatte 22 erfolgt durch eine in Figur 2 nicht dargestellte Tellerfeder, die sich in an sich bekannter Weise an einem Kupplungsgehäuse 23 abstützt.

Die Verbindung des Kupplungsgehäuses 23 mit der Sekundärscheibe 14 erfolgt durch Gewindehülsen 24.Die Gewindehülsen 24 sind über den Umfang der Kupplung verteilt angeordnet. Die Gewindehülsen 24 weisen jeweils einen Gewindestift 25 mit einem Außengewinde auf, der jeweils in eine Bohrung mit einem Innengewinde in der Sekundärscheibe 14 eingeschraubt ist. An den Gewindestift 25 schließt sich ein Bolzenbereich 26 an, wobei der Durchmesser des Bolzenbereichs geringfügig größer ist als der Außendurchmesser des Gewindestifts 25. Der Bolzenbereich 26 dient der Befestigung weiter unten dargestellter Führungsbleche des Fliehkraftpendels. An den Bolzenbereich 26 schließt sich in axialer Richtung gesehen ein Bereich 27 mit einem vergrößerten Durchmesser an, der auf beiden Seiten jeweils einen Anlageteller 28 bzw. 29 als Anlagenfläche für die Führungsbleche bildet. An der dem Kupplungsgehäuse 23 zugewandten Seite weißt die Gewindehülse 24 einen hohlzylindrischen Flansch 30 auf, der durch eine Bohrung des Kupplungsgehäuses 23 ragt. Der hohlzylindrische Flansch 30 weist ein Innengewinde auf, das mit einer entsprechenden Bohrung bis in den Bereich mit vergrößertem Durchmesser 27 in die Gewindehülse 24 eingebracht ist. In das Innengewinde des Gewindestifts 25 ist eine Schraube 31 eingeschraubt, mit der der Kupplungsgehäuse 23 mit der Sekundärscheibe 14 fest verschraubt ist.

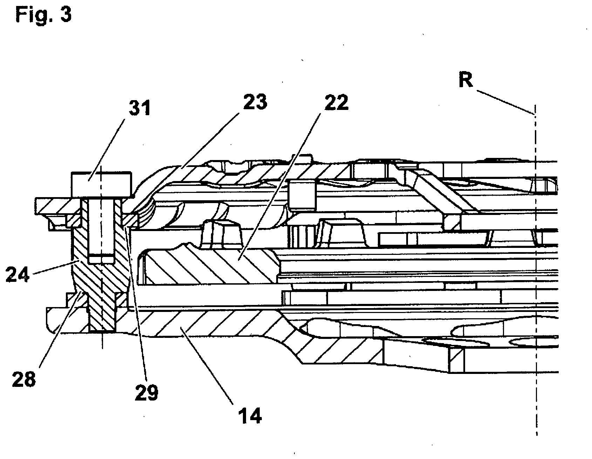

Figur 3 zeigt eine der Reibungskupplungen gemäß Figur 2 in einer vergrößerten Darstellung. Dargestellt ist die Sekundärscheibe 14, an der das Kupplungsgehäuse 23 mittels der Gewindehülsen 24 befestigt ist.

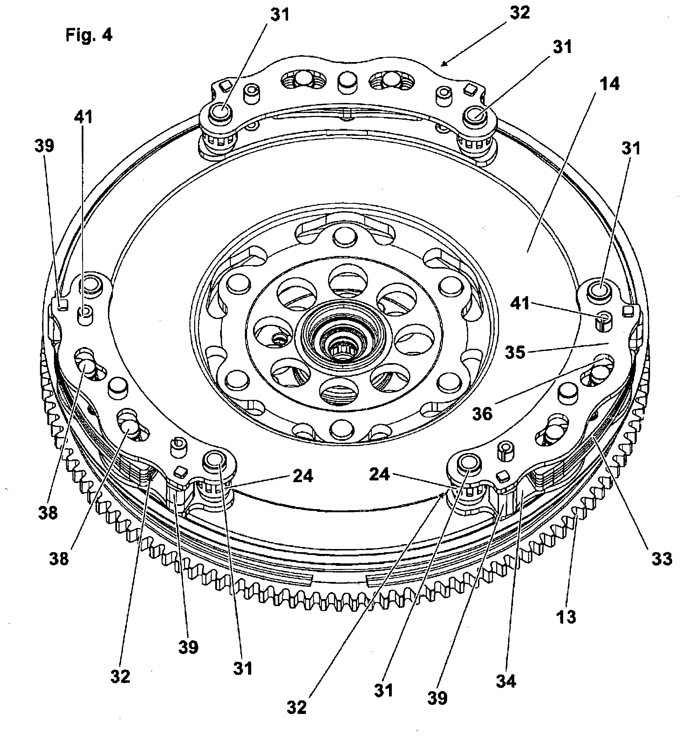

Figur 4 zeigt das Zweimassenschwungrad einschließlich Sekundärscheibe 14 und der daran angebrachten Fliehkraftpendel 32. An dem Zweimassenschwungrad zu erkennen ist der Anlasserzahnkranz 13, die weiter anhand der Figur 2 dargestellten Bauteile sind durch die Sekundärscheibe 14 verdeckt. Im vorliegenden Ausführungsbeispiel sind drei Fliehkraftpendel 32 über den Umfang der Reibungskupplung verteilt angeordnet, hier können aber auch andere Anzahlen an Fliehkraftpendeln, bspw. 2, 4, 5 Fliehkraftpendel usw., vorgesehen sein.

Jedes Fliehkraftpendel umfasst eine Pendelmasse 33, die bspw. aus einem Stapel mehrerer gleichartiger oder ähnlicher Bleche bestehen kann, welche zwischen einem Sekundärscheibenseitigen Führungsblech 34 und einem gehäuseseitigen Führungsblech 35 angeordnet ist. Die Führungsbleche 34, 35 sind jeweils mit Kulissenausnehmungen 36 versehen, entsprechend sind die Pendelmassen 33 mit Kulissenausnehmungen 37 versehen. In den Kulissenausnehmungen 36 der Führungsbleche 34, 35 und der Kulissenausnehmung 37 der Pendelmassen 33 sind Führungsstifte 38 angeordnet. Die Pendelmassen 33 können eine Relativdrehung um einen von der Drehachse R abweichenden Momentenpol ausführen, wobei diese auf den Führungsstiften 38 abrollen, die wiederum auf den Kulissenausnehmungen 37 der Führungsbleche 34, 35 abrollen. Derartige Fliehkraftpendel sind bspw. aus der DE 10 2006 028 552 A1 bekannt.

In Umfangsrichtung beiderseits der Pendelmassen 33 angeordnete Flachniete 39, die jeweils mit Gummimanschetten als Gummianschlag versehen sind, bilden Endanschläge für die Pendelmassen 33. Wie aus Figur 4 zu erkennen ist, sind die sekundärseitigen Führungsbleche 34 mittels der Gewindehülsen 25 an der Sekundärscheibe 14 festgeschraubt. Die gehäuseseitigen Führungsbleche 35 sind über den hohlzylindrischen Flansch 30 der Gewindehülsen 24 geschoben, siehe dazu auch Figur 2 und 3, und werden erst nach Montage des Kupplungsgehäuses 23 durch diesen an die Anlageteller 29 gedrückt. In der in Figur 4 dargestellten vormontierten Baugruppe werden die gehäuseseitigen Führungsbleche 35 einzig durch die Flachniete 39 mit den sekundärseitigen Führungsblechen 34 fest verbunden. Auf diese Art und Weise sind die Fliehkraftpendel 32 aber als vormontierte Baugruppen bereits mit der Sekundärscheibe 14 verbunden. Zentrierbolzen 40 verbinden die gehäuseseitigen Führungsbleche 35 und die sekundärseitigen Führungsbleche 34 mit der Sekundärscheibe 14, indem diese in entsprechende Bohrungen der Sekundärscheibe 14 ragen. Mehrere Scherspannstifte 41, von denen nur die in die gehäuseseitigen Führungsbleche 35 eingebrachten Scherspannstifte 41 in Figur 4 zu sehen sind, verbinden in der fertig montierten Kupplung die sekundärseitigen Führungsbleche 34 mit der Sekundärscheibe 14 bzw. die gehäuseseitigen Führungsbleche 35 mit dem Kupplungsgehäuse 23.

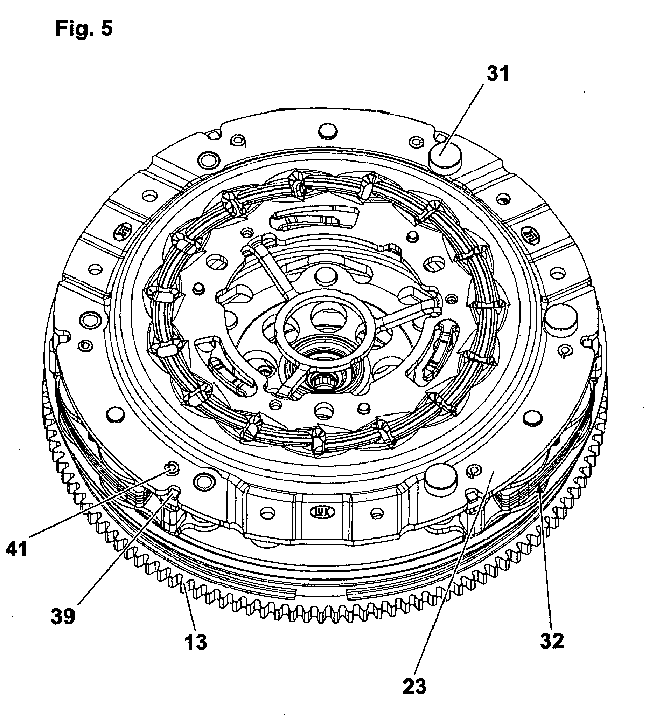

Die in Figur 4 dargestellte vormontierte Baugruppe umfassend das Zweimassenschwungrad mit daran angebrachten Fliehkraftpendeln 32 kann nun mit einer vormontierten Kupplungsgehäusebaugruppe montiert werden, indem letztere auf die in Figur 4 dargestellte Baugruppe aufgeschoben wird. Figur 5 zeigt die vollständig montierte Kupplung.

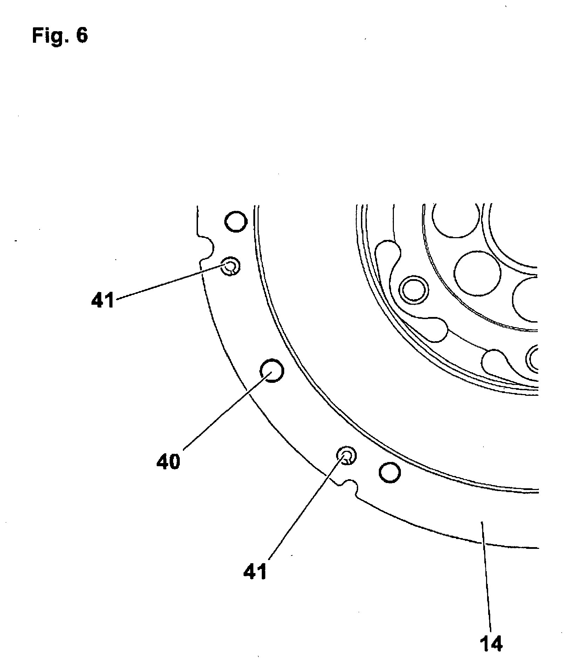

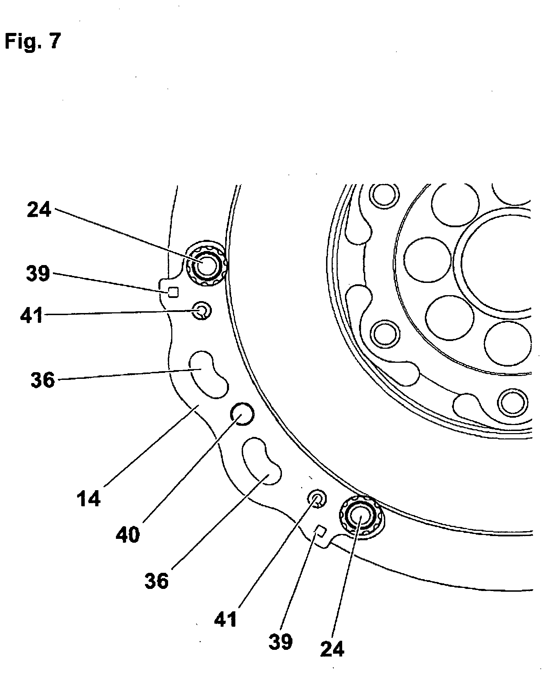

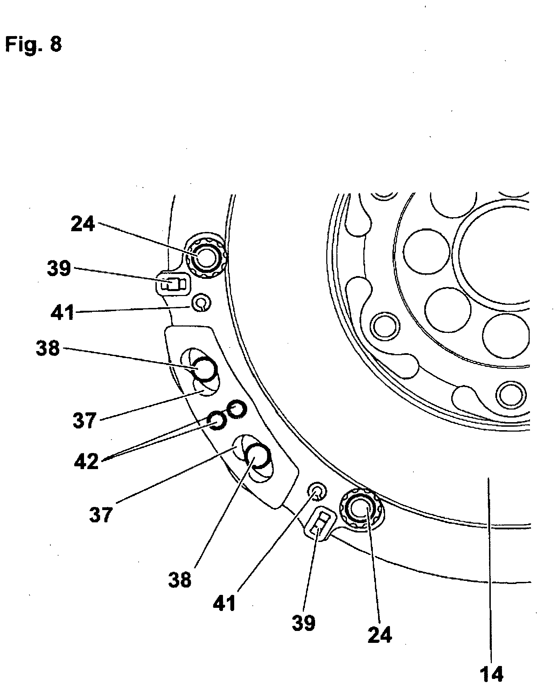

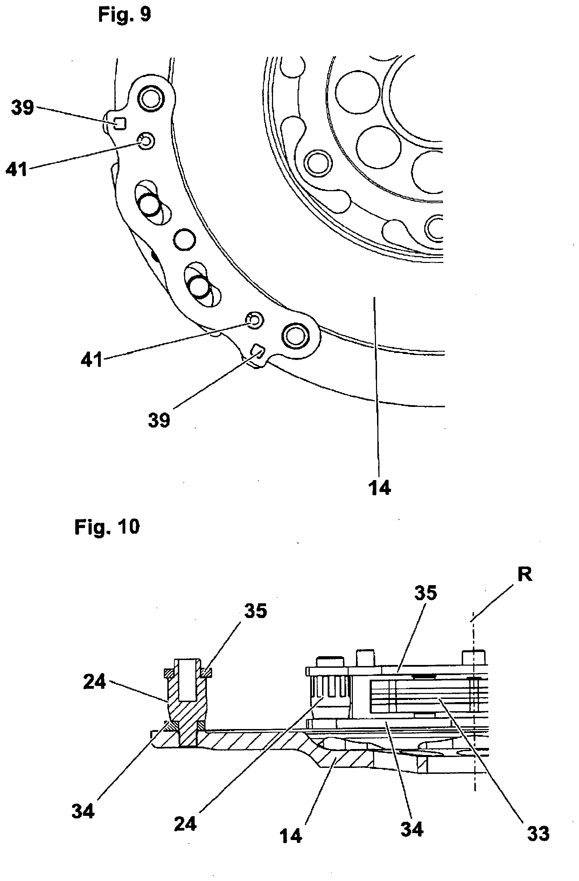

Die Figuren 6 bis 10 zeigen verschiedene Fertigungsstufen der Vormontage der Fliehkraftpendel 32 an der Sekundärscheibe 14. Zunächst werden, wie in Figur 6 dargestellt, die Zentrierbolzen 40 in die entsprechenden Bohrungen der Sekundärscheibe 14 eingepresst. Entsprechend werden auch die Scherspannstifte 41 in die zugehörigen Bohrungen der Sekundärscheibe 14 eingepresst. Im nächsten Schritt werden, wie in Figur 7 dargestellt, die sekundärscheibeseitigen Führungsbleche 34 auf die Sekundärscheibe 14 aufgelegt bzw. aufgepresst, da diese über die Zentrierbolzen 40 bzw. die Scherspannstifte 41 übergeschoben werden müssen. Sodann werden die Gewindehülsen 24 in die entsprechenden Gewindebohrungen der Sekundärscheibe 14 eingeschraubt, wodurch die sekundärscheibeseitigen Führungsbleche 34 auch in axialer Richtung fest mit der Sekundärscheibe 14 verbunden werden. In einem nächsten Schritt werden, wie in Figur 8 dargestellt, die vormontierten Pendelmassen, vormontiert insofern, als dass diese aus mittels Spannstiften 42 fest miteinander verbundenen Blechstapeln bestehen, mitsamt der Führungsstifte 38 in die Kulissenausnehmung 36 der Sekundärscheibeseitigen Führungsbleche 34 eingesetzt. Des Weiteren werden die Flachniete 39 mit den vormontierten Gummianschlägen eingesetzt. Schließlich werden die gehäuseseitigen Führungsbleche 35 aufgelegt und mit den Flachnieten 39 vernietet. Figur 10 zeigt die so vormontierte Baugruppe in einer Seitenansicht.

## Patentansprüche

1. Kupplungsanordnung (4), insbesondere zur Verwendung im Antriebsstrang eines Kraftfahrzeuges, umfassend eine antriebsseitig angeordnete Schwungscheibe (8), die vermittels einer Federanordnung (16) mit einer als Gegendruckplatte dienenden Sekundärscheibe (14) gekoppelt ist und mit dieser Teil eines Zweimassenschwungrades ist, wobei die Sekundärscheibe (14) mindestens ein Fliehkraftpendel (7) trägt, **dadurch gekennzeichnet, dass** das Fliehkraftpendel (7) als Baugruppe vormontiert an der Sekundärscheibe (14) durch eine Gewindehülse (24) angebracht ist, indem die Gewindehülse (24) mit einem Außengewinde in ein Innengewinde der Sekundärscheibe (14) eingeschraubt ist, und ein Kupplungsgehäuse (23) mit einer Schraube (31) mit einem Innengewinde der Gewindehülse (24) verschraubt ist.

2. Kupplungsanordnung nach Anspruch 1, **dadurch gekennzeichnet, dass** das mindestens eine Fliehkraftpendel (7) ein sekundärseitiges Führungsblech (34) und ein gehäuseseitiges Führungsblech (35) umfasst, zwischen denen eine Pendelmasse (33) angeordnet ist, wobei die Führungsbleche (34, 35) beiderseits eines Bereiches der Gewindehülse (24) mit einem vergrößerten Durchmesser angeordnet ist.

3. Kupplungsanordnung nach Anspruch 1 oder 2, **dadurch gekennzeichnet, dass** die Gewindehülse (24) einen holzylindrischen Flansch (30) aufweist, der in eine Bohrung des Kupplungsgehäuses (23) ragt.

4. Kupplungsanordnung nach Anspruch 2 oder 3, **dadurch gekennzeichnet, dass** mindestens ein Scherspannstift (41) in Bohrungen der Sekundärscheibe (14) sowie des Kupplungsgehäuses (23) gelagert ist und durch Bohrungen des sekundärseitigen Führungsblechs (34) und des gehäuseseitigen Führungsblechs (35) ragt.

5. Kupplungsanordnung nach einem der Ansprüche 2 bis 4, **dadurch gekennzeichnet, dass** mindestens ein Anschlagmittel (39) die Pendelbewegung der Pendelmasse (33) begrenzt.

6. Kupplungsanordnung nach Anspruch 5, **dadurch gekennzeichnet, dass** das mindestens eine Anschlagmittel (39) in Bohrungen des sekundärseitigen Führungsblechs (34) und des gehäuseseitigen Führungsblechs (35) gelagert ist.

7. Kupplungsanordnung nach Anspruch 5 oder 6, **dadurch gekennzeichnet, dass** das mindestens eine Anschlagmittel (39) ein Flachniet mit einer Anschlag dämpfenden Ummantelung ist.

8. Kupplungsanordnung nach Anspruch 7, **dadurch gekennzeichnet, dass** das Flachniet mit dem gehäuseseitigen Führungsblech (35) vernietet ist.

9. Kupplungsanordnung nach einem der vorhergehenden Ansprüche, **dadurch gekennzeichnet, dass** ein Primärdeckel der antriebseitigen Schwungscheibe einen hohlzylindrischen Bereich aufweist, der zumindest Teile der Fliehkraftpendel in axialer Richtung überdeckt und so einen Berstschutz bildet.

## Claims

1. Clutch arrangement (4), in particular for use in the drive train of a motor vehicle, comprising a flywheel (8) which is arranged on the drive side, is coupled by means of a spring arrangement (16) to a secondary disk (14) which serves as back-pressure plate and, with the latter, is part of a two-mass flywheel, the secondary disk (14) carrying at least one centrifugal force pendulum (7), **characterized in that**, pre-assembled as a module, the centrifugal force pendulum (7) is attached to the secondary disk (14) by way of a threaded sleeve (24) by the threaded sleeve (24) being screwed with an external thread into an internal thread of the secondary disk (14), and a clutch housing (23) being screwed with a screw (31) to an internal thread of the threaded sleeve (24) .

2. Clutch arrangement according to Claim 1, **characterized in that** the at least one centrifugal force pendulum (7) comprises a guide plate (34) on the secondary-disk side and a housing-side guide plate (35), between which a pendulum mass (33) is arranged, the guide plates (34, 35) being arranged on both sides of a region of the threaded sleeve (24) with an enlarged diameter.

3. Clutch arrangement according to Claim 1 or 2, **characterized in that** the threaded sleeve (24) has a hollow-cylindrical flange (30) which protrudes into a hole of the clutch housing (23).

4. Clutch arrangement according to Claim 2 or 3, **characterized in that** at least one shear clamping stud (41) is mounted in holes of the secondary disk (14) and of the clutch housing (23) and protrudes through holes of the secondary-side guide plate (34) and of the housing-side guide plate (35).

5. Clutch arrangement according to one of Claims 2 to 4, **characterized in that** at least one stop means (39) limits the pendulum movement of the pendulum mass (33).

6. Clutch arrangement according to Claim 5, **characterized in that** the at least one stop means (39) is mounted in holes of the secondary-side guide plate (34) and of the housing-side guide plate (35).

7. Clutch arrangement according to Claim 5 or 6, **characterized in that** the at least one stop means (39) is a flat rivet with a stop-damping sheath.

8. Clutch arrangement according to Claim 7, **characterized in that** the flat rivet is riveted to the housing-side guide plate (35).

9. Clutch arrangement according to one of the preceding claims, **characterized in that** a primary cover of the drive-side flywheel has a hollow-cylindrical region which covers at least parts of the centrifugal force pendulum in the axial direction and thus forms a rupture protection means.

## Revendications

1. Ensemble embrayage (4), en particulier destiné à être utilisé dans la chaîne cinématique d'un véhicule automobile, comportant un volant d'inertie (8) disposé du côté de l'entraînement, lequel volant d'inertie est accouplé à un disque secondaire (14) faisant office de plateau de réaction au moyen d'un ensemble de ressort (16) et fait partie, avec celui-ci, d'un volant d'inertie à deux masses, le disque secondaire (14) supportant au moins un pendule à force centrifuge (7), **caractérisé en ce que** le pendule à force centrifuge (7) est fixé au moyen d'une douille filetée (24) au disque secondaire (14) de manière pré-montée en tant que module, la douille filetée (24) pourvue d'un filetage extérieur étant vissée dans un filetage intérieur du disque secondaire (14), et un carter d'embrayage (23) étant vissé à l'aide d'une vis (31) sur un filetage intérieur de la douille filetée (24).

2. Ensemble embrayage selon la revendication 1, **caractérisé en ce que** l'au moins un pendule à force centrifuge (7) comporte une tôle de guidage (34) du côté secondaire et une tôle de guidage (35) du côté du carter, entre lesquelles est disposée une masse pendulaire (33), les tôles de guidage (34, 35) étant disposées de part et d'autre d'une région de la douille filetée (24) présentant un diamètre agrandi.

3. Ensemble embrayage selon la revendication 1 ou 2, **caractérisé en ce que** la douille filetée (24) comprend une bride cylindrique creuse (30) qui fait saillie dans un alésage du carter d'embrayage (23) .

4. Ensemble embrayage selon la revendication 2 ou 3, **caractérisé en ce qu'**au moins une goupille de serrage de cisaillement (41) est montée dans des alésages du disque secondaire (14) ainsi que du carter d'embrayage (23) et fait saillie à travers des alésages de la tôle de guidage (34) du côté secondaire et de la tôle de guidage (35) du côté du carter.

5. Ensemble embrayage selon l'une quelconque des revendications 2 à 4, **caractérisé en ce qu'**au moins un moyen de butée (39) limite le mouvement pendulaire de la masse pendulaire (33).

6. Ensemble embrayage selon la revendication 5, **caractérisé en ce que** l'au moins un moyen de butée (39) est monté dans des alésages de la tôle de guidage (34) du côté secondaire et de la tôle de guidage (35) du côté du carter.

7. Ensemble embrayage selon la revendication 5 ou 6, **caractérisé en ce que** l'au moins un moyen de butée (39) est un rivet plat pourvu d'une enveloppe d'amortissement de butée.

8. Ensemble embrayage selon la revendication 7, **caractérisé en ce que** le rivet plat est riveté sur la tôle de guidage (35) du côté du carter.

9. Ensemble embrayage selon l'une quelconque des revendications précédentes, **caractérisé en ce qu'**un couvercle primaire du volant d'inertie du côté de l'entraînement comprend une région cylindrique creuse qui recouvre au moins des parties des pendules à force centrifuge dans la direction axiale et forme ainsi une protection contre l'éclatement.
